(19) Europäisches Patentamt / European Patent Office / Office européen des brevets

(11) **EP 4 265 569 A1**

(12) **EUROPEAN PATENT APPLICATION**
published in accordance with Art. 153(4) EPC

(43) Date of publication:
**25.10.2023 Bulletin 2023/43**

(21) Application number: **21906654.5**

(22) Date of filing: **15.12.2021**

(51) International Patent Classification (IPC):
**C01G 35/00** (2006.01)    **H01M 4/86** (2006.01)

(52) Cooperative Patent Classification (CPC):
**C01G 35/00; H01M 4/86;** Y02E 60/50

(86) International application number:
**PCT/JP2021/046284**

(87) International publication number:
**WO 2022/131293 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.12.2020   JP 2020208580**

(71) Applicants:
• **NIHON KAGAKU SANGYO CO.,LTD.**
**Tokyo 110-0015 (JP)**

• **University of Yamanashi**
**Kofu-shi, Yamanashi 400-8510 (JP)**

(72) Inventors:
• **ARATA Chisato**
**Soka-shi, Saitama 340-0005 (JP)**
• **WATANABE Sumitaka**
**Soka-shi, Saitama 340-0005 (JP)**
• **KAKINUMA Katsuyoshi**
**Kofu-shi, Yamanashi 400-8510 (JP)**

(74) Representative: **Grünecker Patent- und Rechtsanwälte**
**PartG mbB**
**Leopoldstraße 4**
**80802 München (DE)**

(54) **BEAD STRING OF TIN OXIDE CRYSTALLITE OR BEAD STRING OF COMPLEX OXIDE CRYSTALLITE OF TIN OXIDE AND TITANIUM OXIDE**

(57)    [Object] There is proposed a novel material which is a bead string of tin oxide crystallite or a bead string of complex oxide crystallite of tin oxide and titanium oxide, in which the material contains tantalum and has specific hue as well as a crystallite size on the order of nanometer, and exhibits excellent conductivity and can improve the catalytic activity.

[Solution] A bead string comprising a tin oxide crystal particle aggregate or a crystal particle aggregate of a complex oxide of tin oxide and titanium oxide, in which the crystal particle aggregate contains at least one particle having a crystallite size of 5 to 50 nm, and in which when the crystal particle aggregate is pressed under a pressure of 0.1 MPa so as to have a thickness of 1 cm, in the color of the resultant particle aggregate represented by the Lab color space, a lightness L* value is 80 or less, a chromaticity a* value is -4 or less, and a chromaticity b* is -3 or less.

Fig.1

## Description

Technical Field

The present invention relates to a bead string of tin oxide crystallite or bead string of complex oxide crystallite of tin oxide and titanium oxide, and relates to a bead string of tin oxide crystallite containing tantalum and having specific color as well as a crystallite size on the order of nanometer.

Background Art

Tin oxide has been known as a material used for an electrode for fuel cell, and the like.

Meanwhile, the support of a catalyst used in an electrode for fuel cell is required to have performance, such as high durability (resistance to oxidation and dissolution due to an strong acid or a high potential), high electrical conductivity (reduction of cell internal resistance and support conductivity «= interfacial resistance between particles + resistance in particles»), excellent porosity (performance for permitting the raw material gas and formed water to smoothly pass therethrough), and high catalytic activity (performance for causing the activity of the catalyst metal to be as high as possible).

Generally, an electrode for fuel cell has a construction in which the electrode has a metal as a catalyst supported on a support having conductivity, and conventionally, there are (1) an electrode having noble metal alloy particles (PTLs 1, 6, and 7) or perovskite oxide fine particles or a base metal oxide (PTLs 2 to 5) supported on carbon particles, and (2) an electrode having a noble metal supported on a metal oxide (PTL 5), but these electrodes have problems in that the electrode (1) using carbon particles as a support has no resistance to oxidation, and in that the electrode (2) using a metal oxide as a support has poor resistance to dissolution.

Further, (3) an electrode using tin oxide doped with Nb as a support (PTL 8) and (4) an electrode using a tin oxide nano-bead string structure material doped with Nb or Ta as a support (PTL 9) have been known, but the electrode (3) using the support doped with Nb is disadvantageous not only in that the gas permeability is poor, but also in that the interfacial resistance of the particles is high and the conductivity is low, and the electrode (4) using the nano-bead string structure material has excellent porosity and reduced interfacial resistance, and exhibits excellent catalytic activity, but has not yet achieved satisfactory reduction of the cell internal resistance.

PTL 1: JP2001-15121A
PTL 2: JP2008-4286A
PTL 3: JP2006-26586A
PTL 4: JP2004-363056A
PTL 5: JP2005-174835A
PTL 6: JP2008-155111A
PTL 7: JP2005-44659A
PTL 8: WO2011/65471
PTL 9: WO2015/050046

Summary of Invention

Technical Problem

For solving the above-mentioned various problems accompanying the conventional supports, studies are being made, and there are increasing demands for the development of a material that is suitable for various applications (for example, a support for catalysts other than the electrode catalyst, a conductive material, and a gas sensor electrode) as well as a support of an electrode catalyst for fuel cell, and, for meeting the demands, a task is to propose a novel material which not only has excellent conductivity and durability but also can improve the catalytic activity, and further has high porosity.

Solution to Problem

The present inventors have made studies on the tin oxide nano-bead string structure material containing Ta among those which have been previously proposed (PTL 8).

With respect to the above-mentioned proposed structure material and the structure material of the present application (hereinafter, frequently referred to as "the structure material of the invention"), hue and conductivity performance were evaluated.

As a result, findings were obtained that, as compared to the proposed structure material, the structure material of the invention has specific hue, namely, has a lightness L* value, a chromaticity a* value, and a chromaticity b* value which are in their respective specific ranges, and has such high performance that the conductivity is 10 times (the internal resistance is 1/10) or more that of the proposed structure material. Both the proposed structure material and the structure material of the invention had a chromaticity a* value in the range of from -7 to -4. It has also been found that the high conductivity performance is maintained for a long term.

Then, studies were made on a comparison between the construction of the structure material of the invention and that of the proposed structure material using a transmission electron microscope (TEM) image and the like. As a result, it was found that both the structure materials had a bead string structure.

The same studies as mentioned above have been made with respect to the nano-bead string structure material of complex oxide of tin oxide and titanium oxide, which contains Ta, and it has been found that the same results as mentioned above are obtained.

The bead string of tin oxide crystallite or bead string of complex oxide crystallite of tin oxide and titanium oxide of the invention has been made based on the above findings, and is

a bead string comprising a tin oxide crystal particle aggregate or a crystal particle aggregate of a complex oxide of tin oxide and titanium oxide containing tantalum,

wherein when the crystal particle aggregate is pressed under a pressure of 0.1 MPa so as to have a thickness of 1 cm and hue represented by the Lab color space of the resultant crystal particle aggregate is measured using a spectrophotometer (Model CM-5, manufactured by Konica Minolta, Inc.) by a specular reflected light removing optical system, in the color of the particle aggregate represented by the Lab color space, a lightness L* value is 80 or less, a chromaticity a* value is -4 or less, and a chromaticity b* is -3 or less, and

in which the tin oxide crystal particle aggregate or crystal particle aggregate of a complex oxide of tin oxide and titanium oxide contains at least one particle having a crystallite size of 5 to 50 nm.

Advantageous Effects of Invention

The bead string of tin oxide crystallite or bead string of complex oxide crystallite of tin oxide and titanium oxide of the invention has excellent conductivity and can be used as various conductive materials, and further has high porosity. Therefore, the bead string of invention is effective as a support of an electrode catalyst for fuel cell, as compared to a conventional support.

In addition, the bead string of invention can improve the activity of a catalyst component, and therefore can be advantageously used not only as a support of an electrode catalyst for fuel cell but also as a support of other various types of catalysts. The bead string of invention has such high durability that the bead string does not suffer oxidation and dissolution due to even an strong acid or a high potential.

Brief Description of Drawing

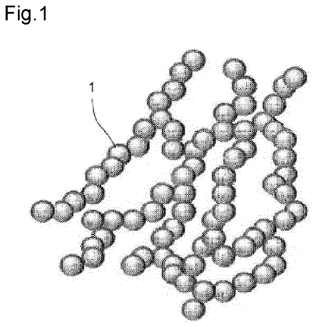

[FIG. 1] FIG. 1 is a diagram of typical structure for explaining the structure of the bead string of tin oxide crystallite or bead string of complex oxide crystallite of tin oxide and titanium oxide.

Description of Embodiments

The tin oxide crystallite or complex oxide crystallite of tin oxide and titanium oxide in the invention (hereinafter, the two types of crystallites are frequently collectively referred to simply as "tin oxide crystallite") contains tantalum in the crystallite, and therefore the state of electrons in the tin oxide crystallite is changed, so that the tin oxide crystallite has not only specific hue but also improved conductivity.

In the invention, the Ta content is:

$$\text{Ta (mol)}/\text{(Ta + Sn) (mol)} \times 100 \approx 0.1 \text{ to } 30 \text{ (mol\%)},$$

or

$$\text{Ta (mol)}/\text{(Ta + Sn + Ti) (mol)} \times 100 \approx 0.1 \text{ to } 30 \text{ (mol\%)},$$

and, when the Ta content is as mentioned above, the tin oxide crystallite has specific hue, and further is suitable for advantageously forming a bead string structure.

The bead string of tin oxide crystallite of the invention comprises a particle aggregate containing at least one particle having a crystal particle size of 5 to 50 nm, which is the above-mentioned tin oxide crystal particle.

In the bead string, as seen in the diagram of typical structure of FIG. 1, a tin oxide crystal particle 1 has a structure in which part of the particle is fused to form a chain or bunch structure (this structure is referred to as "bead string"), and, in the invention, at least one tin oxide crystal particle 1 in the bead string contains tantalum in the above-mentioned tin oxide crystal, and has the above-mentioned particle size.

Further, with respect to the bead string in the invention, the tin oxide crystal particle aggregate was pressed under a pressure of 0.1 MPa, and pressing was stopped at a point in time when the thickness became 1 cm, and hue of the pressed aggregate was measured by a specular reflected light removing optical system using a spectrophotometer (Model CM-5, manufactured by Konica Minolta, Inc.). In the hue represented by the Lab color space, a lightness $L^*$ value is 80 or less, a chromaticity $a^*$ value is -4 or less, and a chromaticity $b^*$ value is -3 or less. The bead string having the above-mentioned lightness and chromaticity has high specific surface area and excellent conductivity, porosity, catalytic activity, and durability.

The above-mentioned bead string of the invention is, for example, produced as follows. A mineral turpentine solution containing metal ions (tin, tantalum and/or titanium) as raw materials is preliminarily prepared, and a mist of the solution is formed by an atomizer using oxygen and/or nitrogen, and introduced into a chemical flame (chemical flame formed from propane, methane, acetylene, hydrogen, nitrous oxide, or the like), plasma, or the like at a high temperature.

By this procedure, in at least 80% of the tin oxide crystal particles, five or more particles are fused and bonded together, forming a bead string of a chain and/or bunch structure.

In view of improving the yield of the bead string, the temperature for the above procedure is suitably 600 to 2,000°C, preferably 1,200 to 1,800°C.

The above-mentioned mineral turpentine solution is prepared by dissolving an organotin compound (at least one member of organic acid tin salts, such as tin alkoxide and tin acetylacetonate, and the like) and an organotantalum compound (at least one member of organic acid tantalum salts, such as tantalum alkoxide, and the like) and/or an organotitanium compound (at least one member of organic acid titanium salts, such as titanium alkoxide, and the like) in an organic solvent (at least one member of turpentine oil, heptane, methanol, ethanol, and the like).

The concentration of the tin compound in the raw material liquid is suitably 1 to 50% by mass, preferably 3 to 14% by mass, in terms of an amount of tin, and, with respect to the concentration of the tantalum compound and/or titanium compound, the ratio of the tin compound and the tantalum compound and/or titanium compound in the raw material liquid may be controlled so that the Ta content of the final product, i.e., the structure material of the invention is consistent with the above-mentioned ratio.

The thus obtained raw material liquid (mineral turpentine solution) is fed to, for example, a chemical flame formed from fuel gas, such as propane, methane, acetylene, hydrogen, or nitrous oxide, to cause combustion, obtaining the bead string of tin oxide crystallite of the invention having a chain and/or bunch structure.

That is, immediately after the raw material liquid is fed to a chemical flame, a reaction and cooling are conducted, and primary particles are produced and, at the same time, the primary particles are partially fused and bonded together, so that the chain and/or bunch structure having high specific surface area in the invention is formed.

[Example 1-1]

Ta-doped $SnO_2$ having a Ta content of 3 mol% was synthesized as described below, in which the Ta content is represented by: Ta/(Sn «mol» + Ta «mol»).

20 g of dibutyltin bisacetylacetonate (trade name "NACEM Tin", manufactured by Nihon Kagaku Sangyo Co., Ltd.; Sn = 28 «% by mass»), 0.59 g of tantalum ethoxide (trade name "Tantalum ethoxide", manufactured by Hokko Chemical Industry Co., Ltd.; Ta = 44.5 «% by mass»), and 60 g of turpentine oil were mixed to prepare a raw material solution.

Oxygen gas at a flow rate of 1 to 30 L/min (5 L/min in the present Example) and propane gas at a flow rate of 1 to 5 L/min (1 L/min in the present Example) were mixed and burned to form a pilot flame, and the above-adjusted solution at a flow rate of 1 to 10 g/min (5 g/min in the present Example) and carrier oxygen gas at a flow rate of 1 to 30 L/min (10 L/min in the present Example) were sprayed into the pilot flame to cause combustion, and the gas formed due to the combustion was recovered. The gas contained particles formed by flame synthesis (i.e., the bead string of tin oxide crystallite of the invention), and the particles were separated and recovered.

The recovered particles were observed by a transmission electron microscope, and, as a result, as seen in FIG. 1, it was found that the particles had a chain structure portion in which five or more particles having a crystallite size in the range of from 5 to 30 nm are linked in the form of a string of beads.

Further, the recovered particle aggregate was pressed under a pressure of 0.1 MPa so as to have a thickness of 1 cm, and hue was measured using a spectrophotometer (Model CM-5, manufactured by Konica Minolta, Inc.; by a specular reflected light removing optical system), and, as a result, the lightness L* value, chromaticity a* value, and b* value represented by the Lab color space were as shown in Table 1.

[Example 1-2]

Ta-doped $SnO_2$ having a Ta content of 10 mol% was synthesized as described below, in which the Ta content is represented by: Ta/(Sn «mol» + Ta «mol»).

20 g of dibutyltin bisacetylacetonate (trade name "NACEM Tin", manufactured by Nihon Kagaku Sangyo Co., Ltd.; Sn = 28 «% by mass»), 2.1 g of tantalum ethoxide (trade name "Tantalum ethoxide", manufactured by Hokko Chemical Industry Co., Ltd.; Ta = 44.5 «% by mass»), and 70 g of turpentine oil were mixed to prepare a raw material solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and, as a result, like Example 1-1, the particles had a chain structure portion in which five or more particles having a crystallite size in the range of 7 to 35 nm are linked in the form of a string of beads, and further the recovered particle aggregate was pressed under a pressure of 0.1 MPa so as to have a thickness of 1 cm, and hue was measured using a spectrophotometer and, as a result, the lightness L* value, chromaticity a* value, and b* value represented by the Lab color space were as shown in Table 1.

[Example 2-1]

Ta-doped $SnO_2$ having a Ta content of 3 mol% was synthesized by the method described below, in which the Ta content is represented by: Ta (mol)/(Sn «mol» + Ta «mol»).

20 g of tin(II) acetylacetonate (manufactured by Sigma-Aldrich Co., LLC.; Sn = 36.9% by mass), 0.78 g of tantalum ethoxide (manufactured by Hokko Chemical Industry Co., Ltd.; Ta = 44.5% by mass), and 90 g of turpentine oil were mixed to prepare a solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-1 were obtained. Further, hue was measured using a spectrophotometer in the same manner as in Example 1-1, and, as a result, the lightness L* value, chromaticity a* value, and b* value represented by the Lab color space were as shown in Table 1.

[Example 2-2]

Ta-doped $SnO_2$ having a Ta content of 10 mol% was synthesized by the method described below, in which the Ta content is represented by: Ta(mol)/(Sn «mol» + Ta «mol»).

20 g of tin(II) acetylacetonate (manufactured by Sigma-Aldrich Co., LLC.; Sn = 36.9% by mass), 2.81 g of tantalum ethoxide (manufactured by Hokko Chemical Industry Co., Ltd.; Ta = 44.5% by mass), and 90 g of turpentine oil were mixed to prepare a solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-1 were obtained. Further, hue was measured using a spectrophotometer in the same manner as in Example 1-1, and, as a result, the lightness L* value, chromaticity a* value, and b* value represented by the Lab color space were as shown in Table 1.

[Example 3-1]

Ta-doped $SnO_2$ having a Ta content of 3 mol% was synthesized by the method described below, in which the Ta content is represented by: Ta (mol)/(Sn «mol» + Ta «mol»).

20 g of tin t-butoxide (trade name "Tin(IV) t-Butoxide", manufactured by FUJIFILM Wako Pure Chemical Corporation; Sn = 28% by mass), 0.59 g of tantalum ethoxide (trade name "Tantalum ethoxide", manufactured by Hokko Chemical Industry Co., Ltd.; Ta = 44.5% by mass), and 60 g of turpentine oil were mixed to prepare a solution.

The prepared solution was sprayed in the same manner as in Example 1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-1 were obtained. Further, hue was measured using a spectrophotometer in the same manner as in Example 1-1, and, as a result, the lightness L* value, chromaticity a* value, and b* value represented by the Lab color space were as shown in Table 1.

[Example 3-2]

Ta-doped $SnO_2$ having a Ta content of 10 mol% was synthesized by the method described below, in which the Ta content is represented by: Ta (mol)/(Sn «mol» + Ta «mol»).

20 g of tin t-butoxide (trade name "Tin(IV) t-Butoxide", manufactured by FUJIFILM Wako Pure Chemical Corporation; Sn = 28% by mass), 2.13 g of tantalum ethoxide (trade name "Tantalum ethoxide", manufactured by Hokko Chemical Industry Co., Ltd.; Ta = 44.5% by mass), and 70 g of turpentine oil were mixed to prepare a solution.

The prepared solution was sprayed in the same manner as in Example 1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-1 were obtained. Further, hue was measured using a spectrophotometer in the same manner as in Example 1-1, and, as a result, the lightness L* value, chromaticity a* value, and b* value represented by the Lab color space were as shown in Table 1.

[Example 4-1]

Ta-doped $SnO_2$ having a Ta content of 3 mol% was synthesized by the method described below, in which the Ta content is represented by: Ta (mol)/(Sn «mol» + Ta «mol»).

20 g of dibutyltin bisacetylacetonate (trade name "NACEM Tin", manufactured by Nihon Kagaku Sangyo Co., Ltd.; Sn = 28 «% by mass»), 0.80 g of tantalum(V) butoxide (manufactured by Sigma-Aldrich Co., LLC.; Sn = 36.9% by mass), and 60 g of turpentine oil were mixed to prepare a solution.

The prepared solution was sprayed in the same manner as in Example 1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-1 were obtained. Further, hue was measured using a spectrophotometer in the same manner as in Example 1-1, and, as a result, the lightness L* value, chromaticity a* value, and b* value represented by the Lab color space were as shown in Table 1.

[Example 4-2]

Ta-doped $SnO_2$ having a Ta content of 10 mol% was synthesized by the method described below, in which the Ta content is represented by: Ta (mol)/(Sn «mol» + Ta «mol»).

20 g of dibutyltin bisacetylacetonate (trade name "NACEM Tin", manufactured by Nihon Kagaku Sangyo Co., Ltd.; Sn = 28 «% by mass»), 2.87 g of tantalum(V) butoxide (manufactured by Sigma-Aldrich Co., LLC.; Ta = 33.1% by mass), and 70 g of turpentine oil were mixed to prepare a solution.

The prepared solution was sprayed in the same manner as in Example 1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-1 were obtained. Further, hue was measured using a spectrophotometer in the same manner as in Example 1-1, and, as a result, the lightness L* value, chromaticity a* value, and b* value represented by the Lab color space were as shown in Table 1.

[Example 5-1]

Ta-doped $SnO_2$ having a Ta content of 3 mol% was synthesized by the method described below, in which the Ta content is represented by: Ta (mol)/(Sn «mol» + Ta «mol»).

20 g of dibutyltin bisacetylacetonate (trade name "NACEM Tin", manufactured by Nihon Kagaku Sangyo Co.,

Ltd.; Sn = 28 «% by mass»), 0.49 g of tantalum(V) methoxide (manufactured by Sigma-Aldrich Co., LLC.; Ta = 33.1% by mass), and 60 g of turpentine oil were mixed to prepare a solution.

The prepared solution was sprayed in the same manner as in Example 1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-1 were obtained. Further, hue was measured using a spectrophotometer in the same manner as in Example 1-1, and, as a result, the lightness $L^*$ value, chromaticity $a^*$ value, and $b^*$ value represented by the Lab color space were as shown in Table 1.

[Example 5-2]

Ta-doped $SnO_2$ having a Ta content of 10 mol% was synthesized by the method described below, in which the Ta content is represented by: Ta (mol)/(Sn «mol» + Ta «mol»).

20 g of dibutyltin bisacetylacetonate (trade name "NACEM Tin", manufactured by Nihon Kagaku Sangyo Co., Ltd.; Sn = 28 «% by mass»), 1.76 g of tantalum(V) methoxide (manufactured by Sigma-Aldrich Co., LLC.; Ta = 33.1% by mass), and 70 g of turpentine oil were mixed to prepare a solution.

The prepared solution was sprayed in the same manner as in Example 1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-1 were obtained. Further, hue was measured using a spectrophotometer in the same manner as in Example 1-1, and, as a result, the lightness $L^*$ value, chromaticity $a^*$ value, and $b^*$ value represented by the Lab color space were as shown in Table 1.

[Example 6]

Ta-doped $SnO_2$ having a Ta content of 30 mol% was synthesized by the method described below, in which the Ta content is represented by: Ta (mol)/(Sn «mol» + Ta «mol»).

20 g of dibutyltin bisacetylacetonate (trade name "NACEM Tin", manufactured by Nihon Kagaku Sangyo Co., Ltd.; Sn = 28 «% by mass»), 8.22 g of tantalum ethoxide (trade name "Tantalum ethoxide", manufactured by Hokko Chemical Industry Co., Ltd.; Ta = 44.5 «% by mass»), and 90 g of turpentine oil were mixed to prepare a raw material solution.

The prepared solution was sprayed in the same manner as in Example 1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-2 were obtained. Further, hue was measured using a spectrophotometer in the same manner as in Example 1-1, and, as a result, the lightness $L^*$ value, chromaticity $a^*$ value, and $b^*$ value represented by the Lab color space were as shown in Table 1.

[Example 7-1]

Ta+Ti-doped $SnO_2$ having a Ta content of 3 mol% and having a Ti content of 10 mol% was synthesized by the method described below, in which the Ta content is represented by: Ta (mol)/(Sn «mol» + Ta «mol» + Ti «mol»), the Ti content is represented by: Ti (mol)/(Ti «mol» + Sn «mol»), and Ta:Ti (mol) = 9:1.

20 g of dibutyltin bisacetylacetonate (trade name "NACEM Tin", manufactured by Nihon Kagaku Sangyo Co., Ltd.; Sn = 28 «% by mass»), 1.78 g of tetra-n-butoxytitanium (trade name "B-1", manufactured by Nippon Soda Co., Ltd.; Ti = 14.1% by mass) as a Ti source, 0.66 g of tantalum ethoxide (trade name "Tantalum ethoxide", manufactured by Hokko Chemical Industry Co., Ltd.; Ta = 44.5 «% by mass»), and 70 g of turpentine oil were mixed, and sprayed in the same manner as in Example 1-1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-2 were obtained. Further, hue was measured using a spectrophotometer in the same manner as in Example 1-1, and, as a result, the lightness $L^*$ value, chromaticity $a^*$ value, and $b^*$ value represented by the Lab color space were as shown in Table 1.

[Example 7-2]

Ta+Ti-doped $SnO_2$ having a Ta content of 3 mol% and having a Ti content of 50 mol% was synthesized by the method described below, in which the Ta content is represented by: Ta (mol)/(Sn «mol» + Ta «mol» + Ti «mol»), the Ti content is represented by: Ti (mol)/(Ti «mol» + Sn «mol»), and Ta:Ti = 5:5 (molar ratio).

10 g of dibutyltin bisacetylacetonate (trade name "NACEM Tin", manufactured by Nihon Kagaku Sangyo Co., Ltd.; Sn = 28 «% by mass»), 8.03 g of tetra-n-butoxytitanium (trade name "B-1", manufactured by Nippon Soda Co., Ltd.; Ti = 14.1% by mass) as a Ti source, 0.59 g of tantalum ethoxide (trade name "Tantalum ethoxide", manufactured by Hokko Chemical Industry Co., Ltd.; Ta = 44.5 «% by mass»), and 70 g of turpentine oil were mixed, and sprayed in the same manner as in Example 1-1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-2 were obtained. Further, hue was measured using a spectrophotometer in the same manner as in Example 1-1, and, as a result, the lightness L* value, chromaticity a* value, and b* value represented by the Lab color space were as shown in Table 1.

[Example 8-1]

Ta+Ti-doped SnO2 having a Ta content of 10 mol% and having a Ti content of 10 mol% was synthesized by the method described below, in which the Ta content is represented by: Ta (mol) + Ti (mol)/(Sn «mol» + Ta «mol» + Ti «mol»), the Ti content is represented by: Ti (mol)/(Ti «mol» + Sn «mol»), and Ta:Ti = 9:1 (molar ratio).

20 g of dibutyltin bisacetylacetonate (trade name "NACEM Tin", manufactured by Nihon Kagaku Sangyo Co., Ltd.; Sn = 28 «% by mass»), 1.78 g of tetra-n-butoxytitanium (trade name "B-1", manufactured by Nippon Soda Co., Ltd.; Ti = 14.1% by mass) as a Ti source, 9.13 g of tantalum ethoxide (trade name "Tantalum ethoxide", manufactured by Hokko Chemical Industry Co., Ltd.; Ta = 44.5 «% by mass»), and 90 g of turpentine oil were mixed, and sprayed in the same manner as in Example 1-1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-2 were obtained. Further, hue was measured using a spectrophotometer in the same manner as in Example 1-1, and, as a result, the lightness L* value, chromaticity a* value, and b* value represented by the Lab color space were as shown in Table 1.

[Example 8-2]

Ta+Ti-doped SnO2 having a Ta content of 10 mol% and having a Ti content of 50 mol% was synthesized by the method described below, in which the Ta content is represented by: Ta (mol) + Ti (mol)/(Sn «mol» + Ta «mol» + Ti «mol»), the Ti content is represented by: Ti (mol)/(Ti «mol» + Sn «mol»), and Ta:Ti = 5:5 (molar ratio).

10 g of dibutyltin bisacetylacetonate (trade name "NACEM Tin", manufactured by Nihon Kagaku Sangyo Co., Ltd.; Sn = 28 «% by mass»), 8.03 g of tetra-n-butoxytitanium (trade name "B-1", manufactured by Nippon Soda Co., Ltd.; Ti = 14.1% by mass) as a Ti source, 8.22 g of tantalum ethoxide (trade name "Tantalum ethoxide", manufactured by Hokko Chemical Industry Co., Ltd.; Ta = 44.5 «% by mass»), and 90 g of turpentine oil were mixed, and sprayed in the same manner as in Example 1-1 into a pilot flame formed in the same manner as in Example 1-1 to cause combustion, and, from the recovered gas, particles (i.e., the bead string of tin oxide crystallite of the invention) were separated and recovered.

The recovered particles were observed by a transmission electron microscope in the same manner as in Example 1-1, and results similar to those in Example 1-2 were obtained. Further, hue was measured using a spectrophotometer in the same manner as in Example 1-1, and, as a result, the lightness L* value, chromaticity a* value, and b* value represented by the Lab color space were as shown in Table 1.

[Comparative Example 1-1] (which is an example corresponding to PTL 8 «WO2011/65471», and which applies to the following Comparative Examples)

Ta-doped $SnO_2$ having a Ta content of 3 mol% was synthesized by the method described below, in which the Ta content is represented by: Ta (mol)/(Sn «mol» + Ta «mol»).

38 g of tin octylate (trade name "Nikka Octhix Tin", manufactured by Nihon Kagaku Sangyo Co., Ltd.; Sn = 28% by mass), 5 g of tantalum octylate (trade name "Nikka Octhix Tantalum 10% (T)", manufactured by Nihon Kagaku Sangyo Co., Ltd.; Ta = 10% by mass), and 150 g of turpentine oil were mixed to prepare a solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope, and, as a result, as seen in FIG. 1, it was found that the particles had a chain structure portion in which five or more particles having a crystallite size in the range of 5 to 50 nm are linked in the form of a string of beads, but it was also found that there were a number of particles which do not exist in FIG. 1 (a diagram is not shown).

Further, with respect to the recovered particles, in the same manner as in Example 1-1, the recovered particle aggregate was pressed under a pressure of 0.1 MPa so as to have a thickness of 1 cm, and hue was measured using a spectrophotometer (Model CM-5, manufactured by Konica Minolta, Inc.; by a specular reflected light removing optical system), and, as a result, the lightness L* value, chromaticity a* value, and b* value represented by the Lab color space were as shown in Table 2.

[Comparative Example 1-2]

Ta-doped $SnO_2$ having a Ta content of 10 mol% was synthesized by the method described below, in which the Ta content is represented by: Ta (mol)/(Sn «mol» + Ta «mol»).

33.9 g of tin octylate (trade name "Nikka Octhix Tin", manufactured by Nihon Kagaku Sangyo Co., Ltd.; Sn = 28% by mass), 16.1 g of tantalum octylate (trade name "Nikka Octhix Tantalum 10% (T)", manufactured by Nihon Kagaku Sangyo Co., Ltd.; Ta = 10% by mass), and 150 g of turpentine oil were mixed to prepare a solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and it was found that the particles had a bead string structure, but hue was measured using a spectrophotometer in the same manner as in Comparative Example 1-1, and, as a result, the lightness L* value, chromaticity a* value, and b* value represented by the Lab color space were as shown in Table 2.

[Comparative Example 2-1]

Ta-doped $SnO_2$ having a Ta content of 3% (3 atm%) was synthesized by the method described below, in which the Ta content is represented by: Ta (mol)/(Sn «mol» + Ta «mol»).

40 g of tin octylate (trade name "Nikka Octhix Tin", manufactured by Nihon Kagaku Sangyo Co., Ltd.; Sn = 28% by mass), 1.2 g of tantalum ethoxide (trade name "Tantalum ethoxide", manufactured by Hokko Chemical Industry Co., Ltd.; Ta = 44.5% by mass), and 159 g of turpentine oil were mixed to prepare a solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and results similar to those in Comparative Example 1-1 were obtained. Further, hue was measured using a spectrophotometer in the same manner as in Comparative Example 1-1, and, as a result, the lightness L* value, chromaticity a* value, and b* value represented by the Lab color space were as shown in Table 2.

[Comparative Example 2-2]

Ta-doped $SnO_2$ having a Ta content of 10 mol% was synthesized by the method described below, in which the Ta content is represented by: Ta (mol)/(Sn «mol» + Ta «mol»).

45.2 g of tin octylate (trade name "Nikka Octhix Tin", manufactured by Nihon Kagaku Sangyo Co., Ltd.; Sn = 28% by mass), 4.8 g of tantalum ethoxide (trade name "Tantalum ethoxide", manufactured by Hokko Chemical Industry Co., Ltd.; Ta = 44.5% by mass), and 159 g of turpentine oil were mixed to prepare a solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and results similar to those in Comparative Example 1-1 were obtained. Further, hue was measured using a spectrophotometer in the same manner as in Comparative Example 1-1, and, as a result, the lightness L* value, chromaticity a* value, and b* value represented by the Lab color space were as shown in Table 2.

[Comparative Example 3-1]

Ta-doped $SnO_2$ having a Ta content of 3 mol% was synthesized by the method described below, in which the Ta content is represented by: Ta (mol)/(Sn «mol» + Ta «mol»).

33.9 g of dibutyltin bisacetylacetonate (trade name "NACEM Tin", manufactured by Nihon Kagaku Sangyo Co., Ltd.; Sn = 28% by mass), 4.5 g of tantalum octylate (trade name "Nikka Octhix Tantalum 10% (T)", manufactured by Nihon Kagaku Sangyo Co., Ltd.; Ta = 10% by mass), and 150 g of turpentine oil were mixed to prepare a solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and results similar to those in Comparative Example 1-1 were obtained. Further, hue was measured using a spectrophotometer in the same manner as in Comparative Example 1-1, and, as a result, the lightness L* value, chromaticity a* value, and b* value were represented by the Lab color space as shown in Table 2.

[Comparative Example 3-2]

Ta-doped $SnO_2$ having a Ta content of 10 mol% was synthesized by the method described below, in which the Ta content is represented by: Ta (mol)/(Sn «mol» + Ta «mol»).

33.9 g of dibutyltin bisacetylacetonate (trade name "NACEM Tin", manufactured by Nihon Kagaku Sangyo Co., Ltd.; Sn = 28% by mass), 16.81 g of tantalum octylate (trade name "Nikka Octhix Tantalum 10% (T)", manufactured by Nihon Kagaku Sangyo Co., Ltd.; Ta = 10% by mass), and 150 g of turpentine oil were mixed to prepare a solution.

The prepared solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and results similar to those in Comparative Example 1-1 were obtained. Further, hue was measured using a spectrophotometer in the same manner as in Comparative Example 1-1, and, as a result, the lightness L* value, chromaticity a* value, and b* value represented by the Lab color space were as shown in Table 2.

[Comparative Example 4-1]

Ta-doped $SnO_2$ having a Ta content of 3 mol% and having a Ti content of 10 mol% was synthesized by the method described below, in which the Ta content is represented by: Ta (mol)/(Sn «mol» + Ta «mol» + Ti «mol») , and the Ti content is represented by: Ti (mol)/(Ti «mol» + Sn «mol»).

20 g of tin octylate (trade name "Nikka Octhix Tin", manufactured by Nihon Kagaku Sangyo Co., Ltd.; Sn = 28% by mass), 0.66 g of tantalum ethoxide (trade name "Tantalum ethoxide", manufactured by Hokko Chemical Industry Co., Ltd.; Ta = 44.5% by mass), 1.78 g of tetra-n-butoxytitanium (trade name "B-1", manufactured by Nippon Soda Co., Ltd.; Ti = 14,1% by mass) as a Ti source, and 70 g of turpentine oil were mixed to prepare a solution. The adjusted solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and results similar to those in Comparative Example 1-1 were obtained. Further, hue was measured using a spectrophotometer in the same manner as in Comparative Example 1-1, and, as a result, the lightness L* value, chromaticity a* value, and b* value represented by the Lab color space were as shown in Table 2.

[Comparative Example 4-2]

Ta+Ti-doped SnO2 having a Ta content of 3 mol% and having a Ti content of 50 mol% was synthesized by the method described below, in which the Ta content is represented by: Ta (mol) + Ti (mol)/(Sn «mol» + Ta «mol» + Ti «mol»), the Ti content is represented by: Ti (mol)/(Ti «mol» + Sn «mol»), and Ta:Ti = 5:5 (molar ratio).

10 g of tin octylate (trade name "Nikka Octhix Tin", manufactured by Nihon Kagaku Sangyo Co., Ltd.; Sn = 28% by mass), 0.59 g of tantalum ethoxide (trade name "Tantalum ethoxide", manufactured by Hokko Chemical Industry Co., Ltd.; Ta = 44.5% by mass), 8.03 g of tetra-n-butoxytitanium (trade name "B-1", manufactured by Nippon Soda Co., Ltd.; Ti = 14.1% by mass) as a Ti source, and 70 g of turpentine oil were mixed to prepare a solution. The adjusted solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and results similar to those in Comparative Example 1-1 were obtained. Further, hue was measured using a spectrophotometer in the same manner as in Comparative Example 1-1, and, as a result, the lightness L* value, chromaticity a* value, and b* value represented by the Lab color space were as shown in Table 2.

[Comparative Example 5-1]

Ta+Ti-doped $SnO_2$ having a Ta content of 10 mol% and having a Ti content of 10 mol% was synthesized by the method described below, in which the Ta content is represented by: Ta (mol) + Ti (mol)/(Sn «mol» + Ta «mol» + Ti «mol»), the Ti content is represented by: Ti (mol)/(Ti «mol» + Sn «mol»), and Ta:Ti = 9:1 (molar ratio).

20 g of tin octylate (trade name "Nikka Octhix Tin", manufactured by Nihon Kagaku Sangyo Co., Ltd.; Sn = 28% by mass), 9.13 g of tantalum ethoxide (trade name "Tantalum ethoxide", manufactured by Hokko Chemical Industry Co., Ltd.; Ta = 44.5% by mass), 1.78 g of tetra-n-butoxytitanium (trade name "B-1", manufactured by Nippon Soda Co., Ltd.; Ti = 14.1% by mass) as a Ti source, and 90 g of turpentine oil were mixed to prepare a solution. The adjusted solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and results similar to those in Comparative Example 1-1 were obtained. Further, hue was measured using a spectrophotometer in the same manner as in Comparative Example 1-1, and, as a result, the lightness L* value, chromaticity a* value, and b* value represented by the Lab color space were as shown in Table 2.

[Comparative Example 5-2]

Ta+Ti-doped SnO2 having a Ta content of 10 mol% and having a Ti content of 50 mol% was synthesized by the method described below, in which the Ta content is represented by: Ta (mol) + Ti (mol)/(Sn «mol» + Ta «mol» + Ti «mol»), the Ti content is represented by: Ti (mol)/(Ti «mol» + Sn «mol»), and Ta:Ti = 5:5 (molar ratio).

10 g of tin octylate (trade name "Nikka Octhix Tin", manufactured by Nihon Kagaku Sangyo Co., Ltd.; Sn = 28% by mass), 8.22 g of tantalum ethoxide (trade name "Tantalum ethoxide", manufactured by Hokko Chemical Industry Co., Ltd.; Ta = 44.5% by mass), 8.03 g of tetra-n-butoxytitanium (trade name "B-1", manufactured by Nippon Soda Co., Ltd.; Ti = 14.1% by mass) as a Ti source, and 90 g of turpentine oil were mixed to prepare a solution. The adjusted solution was sprayed in the same manner as in Example 1-1 into a pilot flame formed in the same manner as in Example 1-1 to cause combustion, and, from the recovered gas, particles (i.e., the bead string of tin oxide crystallite for comparison) were separated and recovered.

The recovered particles were observed by a transmission electron microscope in the same manner as in Comparative Example 1-1, and results similar to those in Comparative Example 1-1 were obtained. Further, hue was measured using a spectrophotometer in the same manner as in Comparative Example 1-1, and, as a result, the lightness L* value, chromaticity a* value, and b* value represented by the Lab color space were as shown in Table 2.

[Evaluation example]

[Electrical conductivity (Reduction of cell internal resistance and support conductivity «= interfacial resistance between particles + resistance in particles»)]

With respect to the powders of bead string of tin oxide crystallite obtained in Examples and Comparative Examples above, the conductivity (reduction of cell internal resistance and support conductivity «= interfacial resistance between particles + resistance in particles») was evaluated by an alternating current impedance method. Specifically, using an electrochemical measurement system SP-200, manufactured by Toyo Corporation, and a sample holder SH2-Z, in an atmosphere at a temperature of 20 to 30°C and at a relative humidity of 30 to 70%, the space between parallel electrodes of the sample holder was filled with about 0.1 g of a sample, and a load of one megapascal was applied to the sample from the outside of the electrodes. In this state, an impedance was measured while changing the alternating current frequency from 7 to 10 millihertz. A resistance value of the sample was determined, based on fitting by an equivalent circuit composed of a resistance and a capacitor component for the Nyquist plot obtained by the measurement. From the determined resistance value, the thickness of the sample disposed between the parallel electrodes during the measurement of an impedance, and the area of the parallel electrode in contact with the sample, a conductivity of the sample was estimated. The results were as shown in Tables 1 and 2.

[Table 1]

| Example | Hue | | | Crystallite size Å | Conductivity (μS/cm) |
|---|---|---|---|---|---|
| | Lightness L* value | Chromaticity a* value | Chromaticity b* value | | |
| 1-1 | 75 | -5 | -5 | 5 to 30 | 560 |
| 1-2 | 60 | -6 | -13 | 7 to 35 | 150 |
| 2-1 | 75 | -5 | -5 | 5 to 30 | 580 |
| 2-2 | 75 | -6 | -13 | 7 to 35 | 160 |
| 3-1 | 75 | -5 | -5 | 5 to 30 | 540 |
| 3-2 | 75 | -6 | -13 | 7 to 35 | 140 |
| 4-1 | 75 | -5 | -5 | 5 to 30 | 570 |
| 4-2 | 60 | -6 | -13 | 7 to 35 | 150 |
| 5-1 | 75 | -5 | -5 | 5 to 30 | 540 |
| 5-2 | 60 | -6 | -13 | 7 to 35 | 150 |
| 6 | 50 | -6 | -15 | 7 to 35 | 20 |
| 7-1 | 75 | -5 | -5 | 5 to 30 | 30 |
| 7-2 | 78 | -4 | -5 | 5 to 30 | 10 |
| 8-1 | 65 | -6 | -10 | 5 to 30 | 5 |
| 8-2 | 72 | -4 | -7 | 5 to 30 | 7 |

[Table 2]

| Comparative Example | Hue | | | Crystallite size Å | Conductivity (μS/cm) |
|---|---|---|---|---|---|
| | Lightness L* value | Chromaticity a* value | Chromaticity b* value | | |
| 1-1 | 85 | -5 | 0 | 5 to 50 | 10 |
| 1-2 | 82 | -6 | -5 | 10 to 50 | 2 |
| 2-1 | 85 | -5 | 0 | 5 to 50 | 8 |
| 2-2 | 82 | -6 | -5 | 10 to 50 | 1.1 |
| 3-1 | 85 | -5 | 0 | 5 to 50 | 7 |
| 3-2 | 82 | -6 | -5 | 10 to 50 | 0.8 |
| 4-1 | 85 | -5 | 0 | 5 to 50 | 0.3 |
| 4-2 | 86 | -4 | 1 | 5 to 50 | 0.2 |
| 5-1 | 82 | -6 | -1 | 5 to 50 | 0.4 |
| 5-2 | 87 | -4 | 0 | 5 to 50 | 0.2 |

As is apparent from Tables 1 and 2, the conductivity of the Examples having such color that the L* is 80 or less, the a* value is -4 or less, and the b* is -5 or less is even higher than the conductivity of the Comparative Examples in which the a* value is equivalent to that of the Examples, but the L* is larger than 80 or the b* is larger than -5.

Industrial Applicability

The bead string of tin oxide crystallite of the present invention exhibits specific hue and thus has various excellent properties, as compared to a bead string containing a metal oxide which contains the same dopant but does not exhibit specific hue, and can be extremely advantageously used as, for example, an electrode material for fuel cell.

**Claims**

1. A bead string of tin oxide crystallite or bead string of complex oxide crystallite of tin oxide and titanium oxide, which is a bead string comprising a tin oxide crystal particle aggregate or a crystal particle aggregate of a complex oxide of tin oxide and titanium oxide,

   wherein the crystal particle aggregate contains at least one particle having a crystallite size of 5 to 50 nm, and wherein when the crystal particle aggregate is pressed under a pressure of 0.1 MPa so as to have a thickness of 1 cm, in the color of the resultant particle aggregate represented by the Lab color space, a lightness L* value is 80 or less, a chromaticity a* value is -4 or less, and a chromaticity b* is -3 or less.

Fig.1

<table>
<tr><td colspan="2" align="center">INTERNATIONAL SEARCH REPORT</td><td colspan="2">International application No.<br><br>**PCT/JP2021/046284**</td></tr>
</table>

**A. CLASSIFICATION OF SUBJECT MATTER**

*C01G 35/00*(2006.01)i; *H01M 4/86*(2006.01)i
FI: C01G35/00 C; H01M4/86 B

According to International Patent Classification (IPC) or to both national classification and IPC

**B. FIELDS SEARCHED**

Minimum documentation searched (classification system followed by classification symbols)

C01G35/00; H01M4/86

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); JST7580 (JDreamIII); JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WO 2015/050046 A1 (MITSUI MINING & SMELTING CO) 09 April 2015 (2015-04-09) example 8, table 3 | 1 |
| X | SENOO, Yuichi et al. Cathodic performance and high potential durability of Ta-SnO2-δ-supported Pt catalysts for PEFC cathodes. Electrochemistry Communications. February 2015, vol. 51, pp. 37-40, doi: 10.1016/j.elecom.2014.12.005, 2., 3., fig.1(a), 2 2., 3., fig. 1(a), 2 | 1 |
| A | WO 2014/136908 A1 (MITSUI MINING & SMELTING CO) 12 September 2014 (2014-09-12) entire text | 1 |
| A | WO 2011/065471 A1 (UNIVERSITY OF YAMANASHI) 03 June 2011 (2011-06-03) entire text | 1 |
| P, X | WO 2021/117812 A1 (UNIVERSITY OF YAMANASHI) 17 June 2021 (2021-06-17) claim 1, example 5, table 1 | 1 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 January 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2021/046284**

| Patent document cited in search report | | | Publication date (day/month/year) | Patent family member(s) | | | Publication date (day/month/year) |
|---|---|---|---|---|---|---|---|
| WO | 2015/050046 | A1 | 09 April 2015 | (Family: none) | | | |
| WO | 2014/136908 | A1 | 12 September 2014 | US entire text EP | 2015/0243999 2966715 | A1 A1 | |
| WO | 2011/065471 | A1 | 03 June 2011 | US entire text EP | 2012/0295184 2506350 | A1 A1 | |
| WO | 2021/117812 | A1 | 17 June 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001015121 A
- JP 2008004286 A
- JP 2006026586 A
- JP 2004363056 A
- JP 2005174835 A
- JP 2008155111 A
- JP 2005044659 A
- WO 201165471 A
- WO 2015050046 A